## Europäisches Patentamt
## European Patent Office
## Office européen des brevets

(19)

(11) Veröffentlichungsnummer : **0 404 237 B1**

(12)

# EUROPÄISCHE PATENTSCHRIFT

(45) Veröffentlichungstag der Patentschrift :
**30.08.95 Patentblatt 95/35**

(51) Int. Cl.$^6$ : **H04N 5/21**

(21) Anmeldenummer : **90201553.6**

(22) Anmeldetag : **15.06.90**

(54) **Verfahren und Anordnung zur Rauschunterdrückung eines digitalen Signals.**

(30) Priorität : **20.06.89 DE 3920004**

(43) Veröffentlichungstag der Anmeldung :
**27.12.90 Patentblatt 90/52**

(45) Bekanntmachung des Hinweises auf die
Patenterteilung :
**30.08.95 Patentblatt 95/35**

(84) Benannte Vertragsstaaten :
**DE FR GB IT NL**

(56) Entgegenhaltungen :
**GB-A- 2 102 650**
**US-A- 4 291 333**
**US-A- 4 677 487**
**US-A- 4 854 113**

(73) Patentinhaber : **Philips Patentverwaltung
GmbH
Wendenstrasse 35c
D-20097 Hamburg (DE)**
(84) **DE**
Patentinhaber : **Philips Electronics N.V.
Groenewoudseweg 1
NL-5621 BA Eindhoven (NL)**
(84) **FR GB IT NL**

(72) Erfinder : **Gutsmann, Dieter
Ohmorring 33 B
D-2000 Hamburg 61 (DE)**

(74) Vertreter : **von Laue, Hanns-Ulrich, Dipl.-Ing. et
al
Philips Patentverwaltung GmbH
Wendenstrasse 35c
D-20097 Hamburg (DE)**

**Beschreibung**

Die Erfindung betrifft ein Verfahren zur Rauschunterdrückung eines durch Abtastung eines analogen Signals, insbesondere eines Fernsehsignals, gewonnenen digitalen Signals, sowie eine Anordnung zur Durchführung des Verfahrens.

Bei der Abtastung eines analogen Signals, d.h. also bei der Entnahme von Abtastwerten in kontinuierlichen Zeitabständen, dem sogenannten Abtasttakt, sollte im Idealfall das Analogsignal durch die digitalen Abtastwerte genau wiedergegeben werden. Bei einem konstanten Analogsignal müßten dann die aufeinanderfolgenden Abtastwerte jeweils den gleichen Wert aufweisen. Dieser Idealfall ist in der Praxis jedoch kaum erreichbar, da im Regelfalle dem Analogsignal Rauschen überlagert ist bzw. beim Abtastvorgang störendes Rauschen in Erscheinung tritt. Dies hat dann zur Folge, daß beispielsweise bei einem konstanten Analogsignal die digitalen Abtastwerte ständig sich ändernde Werte annehmen.

Bei Fernsehsignalen, bei denen in einem Bild häufig Flächen gleichen Inhalts auftreten, tritt ein solches Rauschen bzw. die dadurch verursachten Fehler in den Abtastwerten besonders deutlich in Erscheinung.

Aus der GB-A-2 102 650 sind ein Verfahren und eine Anordnung zur Reduzierung von Rauschen in einem elektronischen Signal bekannt, bei denen Mittel vorgesehen sind, mittels derer das elektronische Signal verzögert wird und Vergleichsmittel, mittels derer das verzögerte Signal mit dem unverzögerten Signal verglichen wird. Falls diese Differenz einen vorgegebenen Schwellwert überschreitet, wird als Ausgangssignal das verzögerte Signal gegeben. Anderenfalls wird der Mittelwert aus dem verzögerten und dem unverzögerten Signal am Ausgang geliefert.

Es ist Aufgabe der Erfindung ein Verfahren und eine Anordnung zur Rauschunterdrückung eines digitalen Signals anzugeben, die insbesondere für digitale Fernsehsignale geeignet ist und das insbesondere für abgetastete konstante Analogsignale eine Rauschreduktion der digitalen Signale herbeiführt.

Diese Aufgabe ist für ein Verfahren zur Rauschunterdrückung erfindungsgemäß dadurch gelöst, daß laufend für jeweils zwei aufeinanderfolgende Abtastwerte in Abhängigkeit von deren Wertedifferenz bei Unterschreiten einer vorgebbaren Wertedifferenz der zweite Abtastwert durch den vorhergehenden ersetzt wird.

Je nach Anwendungsbereich ist eine Wertedifferenz vorzugeben, bei deren Unterschreiten des durch Abtastung eines Analogsignals gewonnenen digitalen Signals die aufeinanderfolgenden Abtastwerte nicht mehr verändert werden. Dies bedeutet, daß bei Betrachtung jeweils zweier Abtastwerte der jeweils zweite Abtastwert gleich dem ersten gesetzt wird, wenn die Differenz zwischen beiden Abtastwerten die vorgegebene Wertedifferenz nicht überschreitet. Erst bei Überschreiten dieser Wertedifferenz wird der ursprüngliche Wert des zweiten Abtastwertes beibehalten. Auf diese Weise wird eine wirksame Rauschreduktion erzielt.

Der Wert der vorgegebenen Wertedifferenz ist je nach Einsatzzweck zu wählen. Bei Anwendung des Verfahrens beispielsweise zur Rauschreduktion eines Fernsehsignals ist der Wert so zu wählen, daß einerseits noch nicht zu viele Details verlorengehen und andererseits eine gute Rauschreduktion eintritt.

Das Verfahren hat außerdem den Vorteil, daß Signalsprünge unverfälscht übernommen werden, das Impulsverhalten des Signals also nicht verändert wird.

Nach einer weiteren Ausgestaltung der Erfindung ist vorgesehen, daß bei Vorliegen einer Wertedifferenz der Abtastwerte in einem vorgebbaren Toleranzbereich um die vorgebbare Wertedifferenz herum der zweite Abtastwert durch den Mittelwert aus ihm selbst und dem vorhergehenden Abtastwert ersetzt wird.

Es wird hier also zusätzlich zu der Entscheidung, ob die gerade vorliegende Wertedifferenz zweier Abtastwerte die vorgegebene Wertedifferenz über- oder unterschreitet, außerdem noch ein Toleranzbereich um die vorgebbare Wertedifferenz herum betrachtet. Liegt die vorliegende Wertedifferenz in diesem Toleranzbereich, dann wird der Mittelwert aus dem zweiten Abtastwert und dem ihm vorangehenden Abtastwert gebildet, um den zweiten Abtastwert zu ersetzen. Der Vorteil dieser Vorgehensweise liegt darin, daß bei Vorliegen einer Wertedifferenz in dem vorgebbaren Toleranzbereich ein Herantasten der Abtastwerte an den richtigen Wert erfolgt. Es kann beispielsweise der Fall sein, daß der erste Abtastwert eines konstanten Analogsignals zufällig durch Rauschen gestört ist und infolgedessen falsch ist. Wenn die folgenden Abtastwerte die vorgebbare Wertedifferenz noch nicht überschreiten, würde im folgenden der falsche Wert immer wieder übernommen werden. Sieht man nun um die vorgebbare Wertedifferenz zusätzlich einen Toleranzbereich vor, in dem in der oben beschriebenen Weise vorgegangen wird, so werden die Abtastwerte an den richtigen Wert herangeführt.

Nach einer weiteren Ausgestaltung der Erfindung ist für eine Anordnung zur Durchführung des Verfahrens vorgesehen, daß die Anordnung einen Multiplexer, dessen ersten Eingang die unveränderten Abtastwerte zugeführt sind, ein dem Multiplexer nachgeschaltetes Verzögerungsglied, das jeden Abtastwert um jeweils einen Abtasttakt verzögert und dessen Ausgangssignal einem zweiten Eingang des Multiplexers zugeführt ist, sowie einen Subtrahierer aufweist, dem die unveränderten Abtastwerte und das Ausgangssignal des Verzögerungsgliedes zugeführt sind und dessen Ausgangssignal nach Betragsbildung einem Komparator zugeführt ist, der die ihm zugeführten Werte mit einer vorgebbaren Wertedifferenz vergleicht und ein dem Multiplexer zugeführtes Ausgangssignal liefert, mittels dessen der Multiplexer bei Überschreiten der vorgebbaren Wertedifferenz auf seinen ersten, ansonsten auf seinen zweiten Eingang geschaltet wird.

Dem Komparator ist also die Wertedifferenz zwischen dem jeweils aktuellen, unveränderten Abtastwert und einem um einen Abtasttakt verzögerten Abtastwert, d.h. also dem vorhergehenden Abtastwert, zugeführt. Der Komparator vergleicht diese Wertedifferenz mit einer vorgegebenen Wertedifferenz und steuert den Multiplexer so, daß der Multiplexer nur dann den aktuellen Abtastwert an seinen Ausgang schaltet, wenn die vorgebbare Wertedifferenz durch die beiden Abtastwerte überschritten wird. Anderenfalls wird der Multiplexer auf seinen zweiten Eingang geschaltet, dem das Ausgangssignal des Verzögerungsgliedes zugeführt ist, also der Abtastwert des vorigen Abtasttaktes. Es tritt dann die gewünschte Rauschreduktion ein.

Nach einer weiteren Ausgestaltung der Erfindung ist vorgesehen, daß der Multiplexer einen dritten Eingang aufweist, dem der Mittelwert aus dem aktuellen, unveränderten Abtastwert und dem Ausgangssignal des Verzögerungsgliedes zugeführt ist, und daß der Multiplexer bei Vorliegen einer Wertedifferenz im Toleranzbereich auf den dritten Eingang geschaltet wird.

Die oben beschriebene noch bessere Annäherung an den tatsächlichen Signalwert läßt sich bei der Anordnung dadurch erreichen, daß der Multiplexer zusätzlich einen dritten Eingang aufweist, der dann aktiviert wird, wenn die Wertedifferenz der aufeinanderfolgenden Abtastwerte gerade in dem Toleranzbereich liegt. Es wird dann der Mittelwert aus dem jeweils aktuell unveränderten Abtastwert und dem Ausgangssignal des Verzögerungsgliedes auf den Ausgang des Multiplexers geschaltet. Es tritt die oben beschriebene Folge ein, daß bei zufällig falschem Anfangswert die nachfolgenden Werte langsam an den richtigen Wert herangeführt werden. Gleichzeitig bleibt jedoch die Wirkung der Rauschunterdrückung erhalten.

Anhand der Zeichnungen werden einige Ausführungsbeispiele der Erfindung näher erläutert. Es zeigen:

Fig. 1 eine erste Ausführungsform einer Anordnung nach der Erfindung,

Fig. 2 eine Anordnung nach Fig. 1 unter zusätzlicher Berücksichtigung eines Toleranzbereiches um die vorgebbare Wertedifferenz herum und

Fig. 3 eine weitere Ausführungsform, bei der eine Tiefpaßschleife vorgesehen ist.

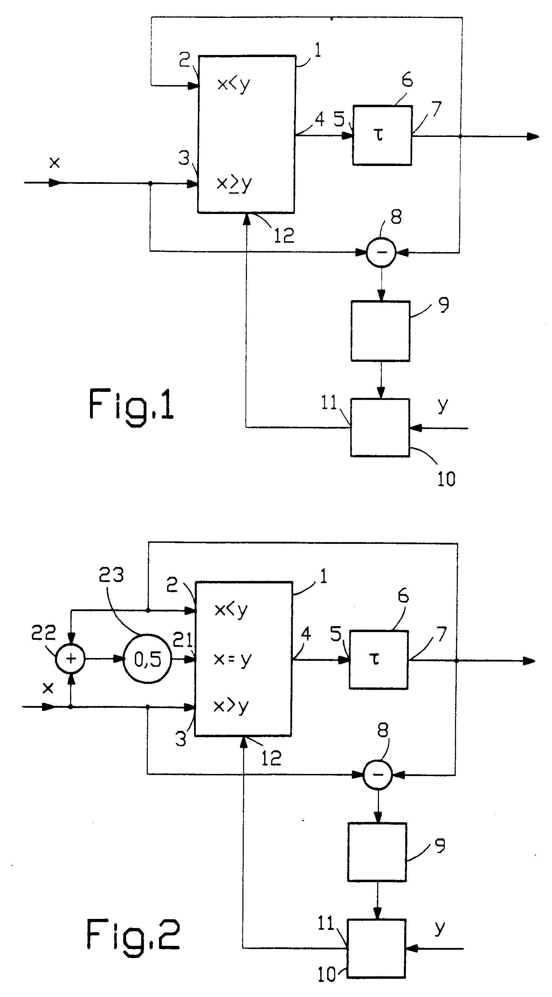

Die in Fig. 1 dargestellte Anordnung weist einen Multiplexer 1 mit einem ersten Eingang 3 und einem zweiten Eingang 2 auf. Dem ersten Eingang 3 des Multiplexers ist ein Eingangssignal X zugeführt, das ein digitales Signal darstellt, d.h. also zeitlich im Abtasttakt aufeinanderfolgende digitale Signalwerte. Ein Ausgang 4 des Multiplexers ist mit einem Eingang 5 eines Verzögerungsgliedes 6 verbunden, der die ihm zugeführten Signale um einen Abtasttakt verzögert. Ein Ausgang 7 des Verzögerungsgliedes 6 ist zum einen auf den zweiten Eingang 2 des Multiplexers 1 und außerdem auf einen Subtrahierer 8 geführt. Das am Ausgang 7 des Verzögerungsgliedes 6 anliegende Signal stellt außerdem das Ausgangssignal der Anordnung dar, d.h. also das rauschreduzierte Eingangssignal.

Dem Subtrahierer 8 ist außerdem das unveränderte Eingangssignal X zugeführt. Die auf diese Weise vom Subtrahierer 8 gebildete Wertedifferenz zwischen dem Ausgangssignal des Verzögerungsgliedes 6 und dem Eingangssignal X ist einem Schaltungselement 9 zugeführt, das den Betrag des Ausgangssignals des Subtrahierers bildet. Diesem Schaltungselement 9 ist ein Komparator 10 nachgeschaltet, dem außerdem eine vorgebbare Wertedifferenz Y zugeführt ist. Ein Ausgang 11 des Komparators 10 ist mit einem Eingang 12 des Multiplexers 1 verbunden.

Diese Anordnung arbeitet in der Weise, daß mit Hilfe des Subtrahierers 8 des Betragsbildners 9 und des Komparators 10 laufend für jeweils zwei aufeinanderfolgende Abtastwerte deren Wertedifferenz verglichen wird. Liegt die Wertedifferenz der beiden Abtastwerte unterhalb der vorgegebenen Wertedifferenz Y, so schaltet der Komparator 10 mittels des an seinem Ausgang 11 anliegenden Signals den Multiplexer 1 auf dessen zweiten Eingang 2. Dies hat zur Folge, daß das mittels des Verzögerungsgliedes 6 verzögerte erste Abtastsignal über den Multiplexer 2 wieder an das Verzögerungsglied 6 gelangt. Dies bedeutet also, daß das Ausgangssignal des Verzögerungsgliedes 6 an dessen Ausgang 7 sich nicht verändert. Der Wert des zweiten Abtastsignals ist also durch den Wert des ersten Abtastsignals ersetzt worden. Dieser Vorgang wiederholt sich solange, bis die festgestellte Wertedifferenz größer oder gleich der vorgegebenen Wertedifferenz ist. In diesem Falle schaltet der Komparator 10 den Multiplexer 1 auf dessen ersten Eingang 3, so daß der zweite Abtastwert an den Ausgang 4 des Multiplexers und über das Verzögerungsglied 6 an den Ausgang der Anordnung gelangt. In diesem Falle werden also die Abtastwerte unverändert an den Ausgang der Anordnung weitergegeben, allerdings jeweils verzögert um einen Abtasttakt.

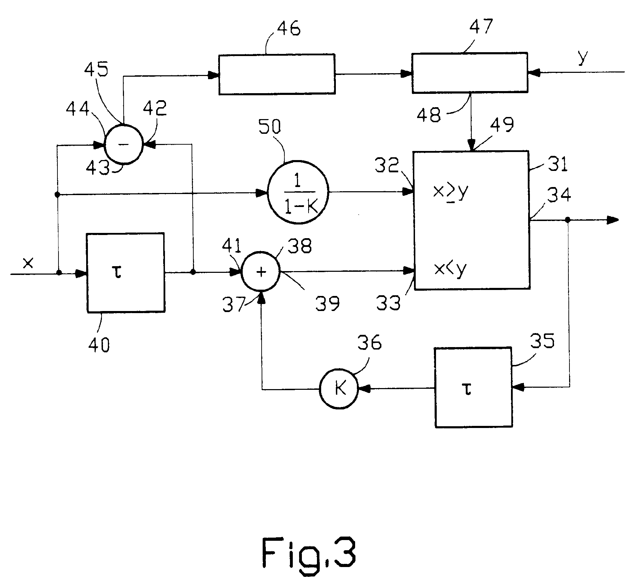

Die in Fig. 2 dargestellte Anordnung arbeitet in ähnlicher Weise wie die nach Fig. 1. Bei der Anordnung nach Fig. 2 wird jedoch neben der vorgebbaren Wertedifferenz ein Toleranzbereich um diese Wertedifferenz herum berücksichtigt, bei dem ein dritter Eingang 21 des Multiplexers 1 aktiviert wird. Das diesem Eingang 21 des Multiplexers 1 zugeführte Signal wird in der Weise gewonnen, daß das am Ausgang 7 des Verzögerungsgliedes 6 anliegende Signal und das unveränderte Eingangssignal X einem Addierer 22 zugeführt sind, dessen Ausgangssignal einem Multiplizierer 23 zugeführt ist. Dieser Multiplizierer 23 multipliziert das ihm zugeführte Signal mit dem Faktor 0,5. Das Ausgangssignal des Multiplizierers 23 ist dann dem dritten Eingang 21 des Multiplexers 1 zugeführt.

Diese in Fig. 2 dargestellte Anordnung arbeitet in ähnlicher Weise wie die in Fig. 1 dargestellte. Es wird jedoch nun zusätzlich auch noch berücksichtigt, ob die gemessene Wertedifferenz in einem Toleranzbereich um die vorgegebene Wertedifferenz Y herumliegt. Sollte dies der Fall sein, wird der dritte Eingang 21 des Multiplexers aktiviert. Es wird dann der Mittelwert aus dem aktuellen Abtastwert und dem um einen Abtasttakt verzögerten Abtastwert an den Ausgang 4 des Multiplexers durchgeschaltet, um nach Verzögerung nur einen Abtasttakt an den Ausgang 7 des Verzögerungsgliedes 6 zu gelangen.

Liegt die festgestellte Wertedifferenz außerhalb des Toleranzbereiches, wird in ähnlicher Weise wie in der Anordnung nach Fig. 1 bei Unterschreiten des Toleranzbereiches der zweite Eingang 2 und bei Überschreiten des Toleranzbereiches der dritte Eingang 3 aktiviert, d.h. auf den Ausgang 4 des Multiplexers 1 geschaltet.

Eine in Fig. 3 dargestellte zweite Ausführungsform der Anordnung weist einen Multiplexer 31 mit einem ersten Eingang 32 und einem zweiten Eingang 33 auf. Ein Ausgang 34 des Multiplexers 31 liefert das Ausgangssignal der Anordnung, das außerdem einem Verzögerungsglied 35 zugeführt ist, in dem das Signal um einen Abtasttakt verzögert wird. Dem Verzögerungsglied 35 ist ein Multiplizierer 36 nachgeschaltet, in dem das Signal mit einem konstanten Faktor K multipliziert wird. Das Ausgangssignal des Multiplizierers 36 ist auf einen ersten Eingang 37 eines Addierers 38 geführt. Ein Ausgang 39 dieses Addierers ist auf den zweiten Eingang 33 des Multiplexers 31 geführt.

Das Eingangssignal X, d.h. also die Folge der laufenden, unveränderten Abtastwerte ist einem Verzögerungsglied 40 zugeführt, dessen Ausgangssignal sowohl auf einen zweiten Eingang 41 des Addierers 38 wie auch auf einen ersten Eingang 42 eines Subtrahierers 43 geschaltet ist. Auf einen zweiten Eingang 44 des Subtrahierers 42 ist das unveränderte Eingangssignal X geschaltet. Ein Ausgang 45 des Subtrahierers 43 ist mit einem Betragsbildner 46 verbunden, dem ein Komparator 47 nachgeschaltet ist. Dem Komparator 47 ist außerdem eine vorgegebene Wertedifferenz Y zugeführt. Ein Ausgang 48 des Komparators 47 ist mit einem weiteren Eingang 49 des Multiplexers 31 verbunden. In Abhängigkeit des an diesem Eingang 49 anliegenden Signals schaltet der Multiplexer auf seinen ersten oder zweiten Eingang.

gang.

Das unveränderte Eingangssignal X ist außerdem einem Multiplizierer 50 zugeführt, dem der erste Eingang 32 des Multiplizierers 31 nachgeschaltet ist. In dem Multiplizierer 50 wird das Signal mit einem Faktor $\frac{1}{1-K}$ multipliziert.

Diese Schaltungsanordnung arbeitet in der Weise, daß in dem Komparator 47 die ihm als Betragswert zugeführte Wertedifferenz zwischen dem aktuellen Eingangssignal und dem in dem Verzögerungsglied 40 um einen Abtasttakt verzögerten Signal mit der vorgegebenen Wertedifferenz Y verglichen wird. Ist die aktuelle Wertedifferenz kleiner als die vorgegebene Wertedifferenz Y, so wird der Multiplexer 31 auf seinen zweiten Eingang 33 geschaltet. Diesem zweiten Eingang 33 des Multiplexers 31 ist die Summe aus dem um einen Abtasttakt verzögerten Eingangssignal X und dem Signal der Rückkopplungsschleife, bestehend aus dem Verzögerungsglied 35 und dem Multiplizierer 36 zugeführt. Diese Rückkopplungsschleife wirkt als Tiefpaßfilter, so daß also schnelle Signaländerungen, und damit insbesondere das Rauschen, nach und nach ausgemittelt werden.

Ist die aktuelle Wertedifferenz größer als die vorgegebene Wertedifferenz Y, so wird mittels des Komparators 47 bzw. des an seinem Ausgang 48 anliegenden Signals der Multiplexer 31 auf seinen ersten Eingang 32 geschaltet. Diesem Eingang 32 ist das aktuelle Eingangssignal X zugeführt, allerdings multipliziert mit dem Faktor $\frac{1}{1-K}$.

Dieser Faktor erzeugt die gleiche Verstärkung wie die Rückkopplungsschleife bestehend aus dem Verzögerungsglied 35 und dem Multiplizierer 33. Dies ist erforderlich, damit die an den beiden Eingängen 32 und 33 des Multiplexers 31 anliegenden Signale in gleichem Maße verstärkt vorliegen. Ist der erste Eingang 32 aktiviert, liegt an dem Ausgang 34 des Multiplexers 31 also das aktuelle Eingangssignal X verstärkt um den Faktor $\frac{1}{1-K}$ an.

Diese in Fig. 3 dargestellte Schaltungsanordnung unterscheidet sich von dem ersten Ausführungsbeispiel vor allem dadurch, daß infolge der als Tiefpaß wirksamen Rückkopplungsschleife bei einem konstanten Eingangssignal X hochfrequente Störungen, d.h. also insbesondere Rauschen, nicht wirksam wird bzw. relativ rasch ausgemittelt wird. Im Falle des Unterschreitens der vorgegebenen Wertedifferenz wird hier nicht nur ein konstanter Wert an den Ausgang der Anordnung geführt, sondern der Wert wird über die Tiefpaßschleife solange korrigiert, bis der Ausgangswert der Anordnung in etwa einem Mittelwert des verrauschten Eingangssignales X entspricht. Auf diese Weise wird sowohl eine gute Rauschreduktion, wie auch eine gute Genauigkeit des Ausgangssignals erreicht.

**Patentansprüche**

1. Verfahren zur Rauschunterdrückung eines durch Abtastung eines analogen Signals, insbesondere eines Fernsehsignals, gewonenen digitalen Signals,
dadurch gekennzeichnet, daß laufend für jeweils zwei aufeinanderfolgende Abtastwerte in Abhängigkeit von deren Wertedifferenz bei Unterschreiten einer vorgebbaren Wertedifferenz der zweite Abtastwert durch den vorhergehenden ersetzt wird.

2. Verfahren nach Anspruch 1,
dadurch gekennzeichnet, daß bei Vorliegen einer Wertedifferenz der Abtastwerte in einem vorgebbaren Toleranzbereich um die vorgebbare Wertedifferenz herum der zweite Abtastwert durch den Mittelwert aus ihm selbst und dem vorhergehenen Abtastwert ersetzt wird.

3. Anordnung zur Durchführung des Verfahrens nach Anspruch 1,
dadurch gekennzeichnet, daß die Anordnung einen Multiplexer (1), dessen ersten Eingang (3) die unveränderten Abtastwerte zugeführt sind, ein dem Multiplexer nachgeschaltetes Verzögerungsglied (6), das jeden Abtastwert um jeweils einen Abtasttakt verzögert und dessen Ausgangssignal einem zweiten Eingang (2) des Multiplexers (1) zugeführt ist, sowie einen Subtrahierer (8) aufweist, dem die unveränderten Abtastwerte und das Ausgangssignal des Verzögerungsgliedes (6) zugeführt sind und dessen Ausgangssignal nach Betragsbildung einem Komparator (10) zugeführt ist, der die ihm zugeführten Werte mit einer vorgebbaren Wertedifferenz vergleicht und ein dem Multiplexer (1) zugeführtes Ausgangssignal liefert, mittels dessen der Multiplexer (1) bei Überschreiten der vorgebbaren Wertedifferenz auf seinen ersten (3), ansonsten auf seinen zweiten Eingang (2) geschaltet wird.

4. Anordnung nach Anspruch 3 zur Durchführung des Verfahrens nach Anspruch 2,
dadurch gekennzeichnet, daß der Multiplexer (1) einen dritten Eingang (21) aufweist, dem der Mittelwert aus dem aktuellen, unveränderten Abtastwert und dem Ausgangssignal des Verzögerungsgliedes zugeführt ist, und daß der Multiplexer (1) bei Vorliegen einer Wertedifferenz im Toleranzbereich auf den dritten Eingang (21) geschaltet wird.

**Claims**

1. A method for noise suppression of a digital signal obtained by sampling an analog signal, particularly a television signal,
characterised in that for every two successive sample values the second sample value is constantly replaced by the preceding sample value in dependence on the difference between these sample values if said difference is smaller than a given difference.

2. A method as claimed in Claim 1,
characterised in that the second sample value is replaced by the average value of the second sample value itself and the preceding sample value if a difference between the sample values lies in a given tolerance range around the given difference.

3. An arrangement for carrying out the method as claimed in Claim 1,
characterised in that the arrangement comprises a multiplexer (1), having a first input (3) to which the unchanged sample values are applied, a delay element (6), which follows the multiplexer, which delay element delays each sample value by one sampling period and whose output signal is applied to a second input (2) of the multiplexer (1), and a subtractor (8), to which the unchanged sample values and the output signal of the delay element (6) are applied and whose output signal, after absolute-value formation, is applied to a comparator (10) which compares the applied values with a given difference and supplies an output signal, which is applied to the multiplexer (1), by means of which output signal the multiplexer (1) is switched to its first input (3) if the given difference in value is exceeded, and to its second input (2) in any other case.

4. An arrangement as claimed in Claim 3, for carrying out the method as claimed in Claim 2,
characterised in that the multiplexer (1) has a third input (21) to which the average value of the current, unchanged sample value and the output signal of the delay element is applied, and in that the multiplexer (1) is switched to the third input (21) if a difference in value within the tolerance range occurs.

**Revendications**

1. Procédé pour la suppression du bruit d'un signal numérique obtenu par échantillonnage d'un signal analogique, en particulier d'un signal de télévision, caractérisé en ce que, en continu, pour deux valeurs d'échantillonnage successives respectives, en fonction de la différence de leurs valeurs, la deuxième valeur d'échantillonnage est remplacée par la précédente lorsque la différence est inférieure à une différence de valeurs prédéterminée.

2. Procédé selon la revendication 1, caractérisé en ce que la deuxième valeur d'échantillonnage est remplacée par la valeur moyenne constituée de cette deuxième valeur et de la valeur d'échantillonnage précédente lorsque l'on est confronté à une différence des valeurs d'échantillonnage se trouvant dans un domaine de tolérance prédéterminé entourant la différence de valeurs prédéterminée.

3. Dispositif destiné à exécuter le procédé de la revendication 1, caractérisé en ce que le dispositif comprend un multiplexeur (1), à la première entrée (3) duquel les valeurs d'échantillonnage non modifiées sont acheminées, un élément à retard (6) monté en aval du multiplexeur, qui retarde chaque valeur d'échantillonnage respectivement d'une impulsion de cadence d'échantillonnage et dont le signal de sortie est acheminé à une deuxième entrée (2) du multiplexeur (1), ainsi qu'un soustracteur (8) auquel les valeurs d'échantillonnage non modifiées et le signal de sortie de l'élément à retard (6) sont acheminés et dont le signal de sortie, après formation d'une valeur absolue, est acheminé à un comparateur (10) qui compare les valeurs qui lui sont acheminées à une différence de valeurs prédéterminée et délivre un signal de sortie acheminé au multiplexeur (1), signal qui commute le multiplexeur (1) sur sa première entrée (3) dans le cas d'un dépassement de la différence de valeurs prédéterminée, et sinon sur sa deuxième entrée (2).

4. Dispositif selon la revendication 3, destiné à exécuter le procédé de la revendication 2, caractérisé en ce que le multiplexeur (1) présente une troisième entrée (21), à laquelle la valeur moyenne constituée de la valeur d'échantillonnage non modifiée actuelle et du signal de sortie de l'élément à retard est acheminée, et en ce que le multiplexeur (1) est commuté sur la troisième entrée (21) en présence d'une différence de valeurs dans le domaine de tolérance.

Fig.1

Fig.2

7

Fig.3